# EUROPÄISCHE PATENTSCHRIFT

(11) **EP 2 408 643 B1**
(45) Veröffentlichungstag und Bekanntmachung des Hinweises auf die Patenterteilung: **16.12.2015**
(21) Anmeldenummer: 10715084.9
(22) Anmeldetag: 10.03.2010
(51) Int. Cl.: B60N 2/225, B60N 2/235

(54) **VORRICHTUNG MIT EINEM BESCHLAG UND EINER ADAPTERPLATTE SOWIE VERFAHREN ZUR HERSTELLUNG EINER SOLCHEN VORRICHTUNG**
DEVICE WITH A FITTING AND AN ADAPTATION PLATE AND A METHOD FOR PRODUCING SUCH A DEVICE
DISPOSITIF AVEC UNE FERRURE ET UNE PLAQUE D'ADAPTATION ET PROCÉDÉ DE FABRICATION D'UN TEL DISPOSITIF

(30) Priorität: 16.03.2009 DE 102009013881
(43) Veröffentlichungstag der Anmeldung: 25.01.2012
(73) Patentinhaber: Brose Fahrzeugteile GmbH & Co. Kommanditgesellschaft Coburg, 96450 Coburg (DE)
(72) Erfinder: FASSBENDER, Frank, 96450 Coburg (DE); STEFFEN, Oliver, 96450 Coburg (DE); ZELLMANN, Michael, 96120 Bischberg (DE)
(74) Vertreter: Maikowski & Ninnemann
(86) Internationale Anmeldenummer: PCT/DE2010/000257
(87) Internationale Veröffentlichungsnummer: WO 2010/105593

(56) Entgegenhaltungen:
- DE-A1- 4 339 508
- DE-A1-102007 009 172
- DE-B3-102004 018 744
- US-A- 5 611 599

## Beschreibung

Die Erfindung betrifft eine Vorrichtung mit einem Beschlag und mindestens einer mit dem Beschlag verbundenen Adapterplatte gemäß dem Oberbegriff des Anspruchs 1 sowie ein Verfahren zur Herstellung einer solchen Vorrichtung. Die Vorrichtung ist in einer Ausgestaltung in einen Fahrzeugsitz, insbesondere in einen Kraftfahrzeugsitz integriert.

Aus der DE 10 2007 009 172 A1 ist ein Beschlag für einen Fahrzeugsitz bekannt, der ein erstes Beschlagteil, ein zweites Beschlagteil und einen die beiden Beschlagteile verbindenden Haltering aufweist. Eine Adapterplatte wird am ersten Beschlagteil und zugleich am Haltering angesetzt. Mitteils einer Schweißnaht werden die Adapterplatte, das erste Beschlagteil und der Haltering gemeinsam miteinander verbunden. Für diese gleichzeitige Verbindung ist jedoch eine Schweißvorrichtung erforderlich, die den Haltering und die beiden Beschlagteile in vorpositionierter Lage zusammenhält. Insbesondere die spielarme Montage des Beschlages in Axialrichtung bedarf dabei eines besonderen Aufwandes.

Nachteilig an der bekannten Lösung ist auch, dass eine eventuelle Prüfung des reinen Beschlags (ohne Adapterplatte) nicht möglich ist, da Beschlag und Adapterplatte durch die gemeinsame Schweißnaht gleichzeitig montiert werden. Dementsprechend ist es auch nicht möglich, projektneutrale Beschläge (ohne Adapterplatte), die ein deutlich geringeres Gewicht haben und eine höhere Packungsdichte zulassen, zu fertigen.

Aus der DE 43 39 508 A1 ist eine gattungsgemässe Vorrichtung für einen Fahrzeugsitz bekannt, mit einem Beschlag und einer mit dem Beschlag verbundenen Adapterplatte. Der Beschlag und die Adapterplatte sind hier ebenfalls über eine Schweißverbindung miteinander verbunden. Die Verschweißung erfolgt hierbei durch einen Kondensator-Impuls-Schweißvorgang, bei dem der Beschlag unter Aufrechterhaltung einer Spannkraft gegen die Adapterplatte gedrückt wird und durch eine Kondensatorentladung Berührungsbereiche zwischen Beschlag und Adapterplatte aufgeschmolzen werden, so dass der Beschlag und die Adapterplatte infolge der auf diese ausgeübten Andruckkraft in eine Endlage überführt werden und an den kurzzeitig aufgeschmolzenen Berührungsbereichen fest miteinander verbunden sind.

Weitere Beschläge für Fahrzeugsitze sind aus der DE 10 2004 018 744 B3, der DE 20 2006 011 556 U1, der EP 1 837 229 A1 und der JP 2007 195868 A bekannt.

Ausgehend von dem genannten Stand der Technik liegt der vorliegenden Erfindung die Aufgabe zugrunde, eine Vorrichtung mit einem Beschlag und einer Adapterplatte sowie ein Verfahren zur Herstellung einer solchen Vorrichtung bereitzustellen, die eine einfache Verbindung zwischen einem Beschlag und einer Adapterplatte ermöglichen.

Diese Aufgabe wird erfindungsgemäß durch eine Vorrichtung mit den Merkmalen des Anspruchs 1 und ein Verfahren mit den Merkmalen des Anspruchs 12 gelöst. Ausgestaltungen der Erfindung sind in den Unteransprüchen angegeben.

Danach sieht die vorliegende Erfindung vor, dass die Adapterplatte mindestens einen Bereich aufweist, der eine reduzierte Wandstärke aufweist, und die Schweißnaht als Überlappnaht in dem Bereich reduzierter Wandstärke in der Adapterplatte ausgebildet ist.

Durch die Realisierung der Schweißverbindung in einem Bereich reduzierter Dicke der Adapterplatte ist ein geringerer Wärmeeintrag zur Herstellung der Schweißverbindung erforderlich. Die Schweißleistung kann aufgrund der Wandstärkenreduzierung verkleinert werden. Ein geringerer Wärmeeintrag bedeutet einen geringeren Schweißverzug, einen geringen Invest (d. h. eine niedrigere Laserleistung) und eine höhere Schweißgeschwindigkeit, so dass die Verbindung zwischen der Adapterplatte und dem Beschlag in einfacher und effektiver Weise bereitstellbar ist. Die erfindungsgemäße Vorrichtung erlaubt es darüberhinaus, die Adapterplatte erst nach Herstellung und ggf. Vorprüfung mit dem eigentlichen Beschlag zu verbinden. Der Beschlag kann eine getrennte Baugruppe darstellen, die gesondert geprüft und transportiert werden kann.

Das Schweißen erfolgt dabei beispielsweise mittels einer Laserschweißvorrichtung. Grundsätzlich können jedoch auch andere Schweißtechniken Einsatz finden. Im Falle eines Laserschweißens wird ein weitergehend reduzierter Wärmeeintrag im Vergleich zum MAG- oder CMT-Schweißen realisiert (MAG = Metall-Aktiv-Gas; CMT = Cold Metal Transfer).

Es wird darauf hingewiesen, dass eine erfindungsgemäße Adapterplatte mit einem Bereich reduzierter Wandstärke zur Verbindung mit dem einen Beschlagteil des Beschlags oder zur Verbindung mit dem anderen Beschlagteil des Beschlags vorgesehen sein kann. Auch können zwei erfindungsgemäße Adapterplatten vorgesehen sein, von denen eine mit dem einen Beschlagteil und die andere mit dem anderen Beschlagteil verbunden ist.

Weiter wird darauf hingewiesen, dass eine Adapterplatte im Sinne der vorliegenden Erfindung ein gegenüber der Sitzstruktur gesondertes Teil (das mit der Sitzstruktur verbunden wird) sein kann, aber nicht muss. So liegt es auch im Rahmen der Erfindung, dass die Adapterplatte ein Sitzstrukturelement darstellt, beispielsweise der Sitzlehne oder des Sitzseitenteils.

In einer bevorzugten Ausgestaltung der Erfindung weisen die Adapterplatte und das erste Beschlagteil miteinander korrespondierende Formschlusselemente auf, die eine Vorpositionierung von Adapterplatte und erstem Beschlagteil zueinander erlauben. Dabei ist mindestens ein Bereich reduzierter Wandstärke an einem oder angrenzend an ein solches Formschlusselement der Adapterplatte ausgebildet. Die korrespondierenden Formschlusselemente sind beispielsweise als Aussparungen der Adapterplatte und als entsprechende Vorsprünge des ersten Beschlagteils ausgebildet. Die Wandstärke der Adapterplatte ist dabei angrenzend an die Aussparung reduziert.

Der Begriff "miteinander korrespondierende Formschlusselemente" schließt auch Strukturen ein, die sich nicht exakt ergänzen. Beispielsweise könnte ebenfalls vorgesehen sein, dass in der Adapterplatte eine größere kreisförmige oder polygonale Aussparung ausgebildet ist, die mehrere Vorsprünge des Beschlagteils umgreift und dadurch eine Vorpositionierung von Adapterplatte und erstem Beschlagteil erlaubt. Die Wandstärke der Adapterplatte wäre wiederum angrenzend an eine solche Aussparung reduziert.

In einer Ausgestaltung ist vorgesehen, dass die Aussparung kreisförmig und ein Bereich reduzierter Wandstärke, der an die Aussparung angrenzt, ringförmig ausgebildet ist. Damit kann im Bereich der miteinander korrespondierenden Formschlusselemente eine Schweißnaht in einfacher Weise gesetzt werden.

In einer weiteren Ausgestaltung sind eine Mehrzahl von Vorsprüngen und zu diesen jeweils korrespondierende Aussparungen als Formschlusselemente vorgesehen, so dass durch die Vorpositionierung die Adapterplatte und das erste Beschlagteil vollständig aufeinander ausgerichtet werden und zur Verbindung dieser Bauteile nur Schweißnähte gesetzt werden müssen.

Der Bereich reduzierter Wandstärke ist beispielsweise bis zu 70 % gegenüber der Wandstärke in anderen Bereichen der Adapterplatte reduziert. Beispielsweise liegt eine Reduzierung vor, die 40 % bis 60 % bezogen auf die nichtreduzierte Wandstärke beträgt. So kann in einer Ausführungsvariante vorgesehen sein, dass die Adapterplatte in einem Bereich reduzierter Wandstärke eine Wandstärke zwischen 1,2 mm und 2,4 mm, insbesondere zwischen 1,5 mm und 2 mm aufweist, während die Wandstärke der Adapterplatte ansonsten einen Wert zwischen 2,5 und 4,5 mm aufweist.

Bei der Schweißnaht, die die Adapterplatte in dem Bereich reduzierter Wandstärke und das erste Beschlagteil miteinander verbindet, handelt es sich erfindungsgemäss um eine Überlappnaht. Die Montage kann in einfacher Weise und toleranzunkritisch erfolgen, indem nach der Vorpositionierung der Montageplatte in Bezug auf das erste Beschlagteil die Montageplatte an das Beschlagteil angedrückt und anschließend die Schweißnaht gesetzt wird. Die Schweißnaht durchdringt dabei als Überlappnaht (Durchschweißnaht) sowohl die Adapterplatte als auch zumindest teilweise das erste Beschlagteil. Eine kostenaufwändige toleranztechnische Feinabstimmung ist nicht erforderlich.

Gegebenenfalls kann vorgesehen sein, dass die Schweißverbindung zwei parallel verlaufende Überlappnähte aufweist. Beispielsweise sind zwei Überlappnähte als zueinander konzentrische Kreise jeweils im Bereich der Aussparungen der Adapterplatte ausgebildet.

Die Dicke der Adapterplatte ist in einem Bereich reduzierter Wandstärke bevorzugt im wesentlichen konstant, d.h. der dickenreduzierte Bereich weist eine konstante Dicke auf. Die Dickenreduktion ist dementsprechend als im Wesentlichen rechtwinklige Stufe in der Adapterplatte ausgebildet.

In einer weiteren Ausgestaltung sind das erste Beschlagteil und ein Haltering des Beschlags, der das erste und das zweite Beschlagteil in axialer Richtung zusammenhält, über eine weitere Schweißnaht miteinander verbunden, die zumindest abschnittsweise umlaufend im ersten Beschlagteil ausgebildet ist. Die weitere Schweißnaht verläuft damit stirnseitig am radialen Ende des ersten Beschlagteils. Durch eine solche Schweißnaht kann der Beschlag vor Verunreinigungen beim Transport oder durch Schweißspritzer bei der Befestigung der Adapterplatte geschützt werden. Die vorgeschaltete weitere Lasernaht schützt insofern die Baugruppe des Beschlags.

Die Erfindung betrifft des Weiteren ein Verfahren zur Herstellung einer Vorrichtung gemäß Anspruch 1. Das Verfahren weist die folgenden Schritte auf:
- Bereitstellen eines Beschlags, der ein erstes Beschlagteil und ein relativ zu dem ersten Beschlagteil um eine Achse drehbares zweites Beschlagteil umfasst,
- Bereitstellen einer Adapterplatte, die mindestens einen Bereich mit einer reduzierten Wandstärke aufweist,
- Verbinden der Adapterplatte mit dem ersten Beschlagteil mittels einer Schweißnaht, die in dem Bereich reduzierter Wandstärke in der Adapterplatte ausgebildet wird, wobei die Schweißnaht zum Verbinden der Adapterplatte mit dem ersten Beschlagteil als Überlappnaht ausgebildet ist.

Die Erfindung wird nachfolgend unter Bezugnahme auf die Figuren der Zeichnung anhand eines Ausführungsbeispieles näher erläutert. Es zeigen:
- Fig. 1: in perspektivischer Seitenansicht ein Ausführungsbeispiel eines mit einer Adapterplatte verbundenen Beschlags;
- Fig. 2: in teilweise aufgebrochener Ansicht die Realisierung einer Schweißnaht zwischen der Adapterplatte und dem einen Beschlagteil bei dem Ausführungsbeispiel der Figur 1;
- Fig. 3: eine perspektivische Schnittdarstellung der Adapterplatte der Figuren 1 und 2;
- Fig. 4: in teilweise aufgebrochener Ansicht eine Ausführungsvariante, bei der die Verbindung zwischen der Adapterplatte und dem Beschlagteil mittels zweier paralleler Schweißnähte erfolgt; und
- Fig. 5: ein Ausführungsbeispiel eines Beschlags, der gemäß den Figuren 1 bis 4 mit einer Adapterplatte verbindbar ist.

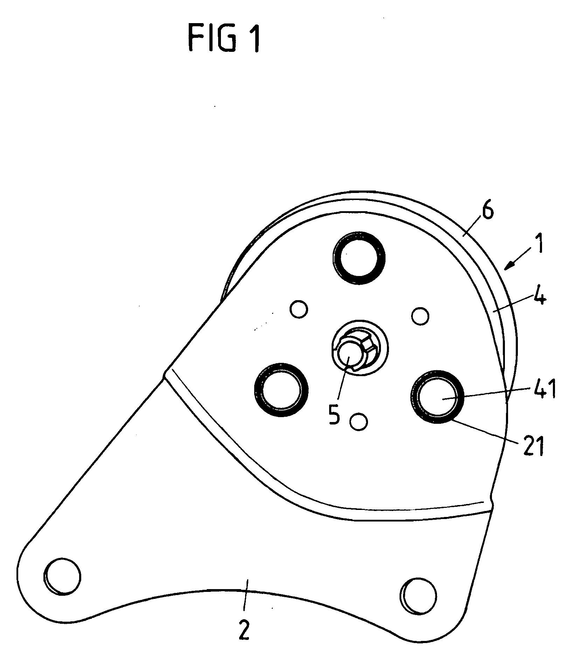

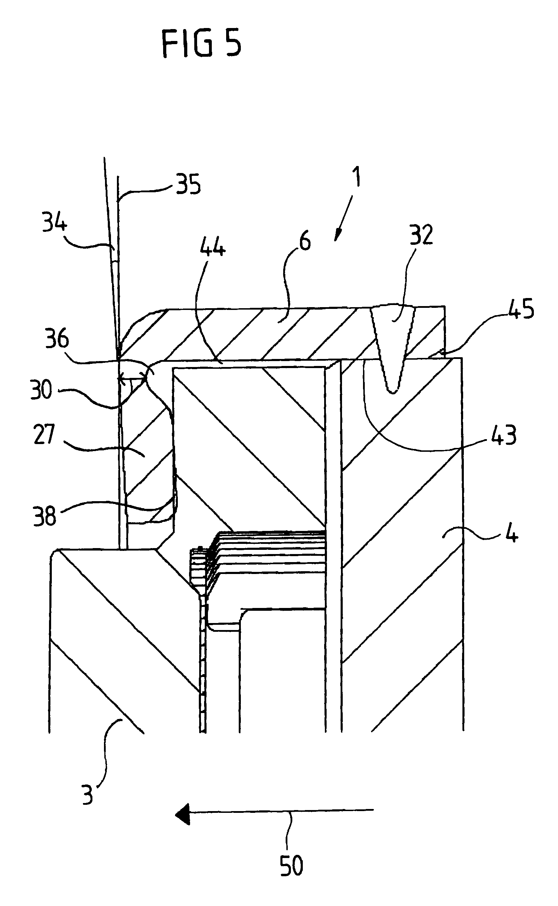

Die Figur 1 zeigt einen Beschlag 1, der mit einer Adapterplatte 2 verbunden ist. Der Beschlag 1 weist in an sich bekannter Weise ein erstes Beschlagteil, ein relativ zu dem ersten Beschlagteil um eine Achse drehbares zweites Beschlagteil und einen Haltering auf, der das erste und das zweite Beschlagteil in axialer Richtung zusammenhält. Eine beispielhafte Ausführung eines Beschlags wird anhand der Figur 5 weiter unten erläutert werden. In der Seitenansicht der Figur 1 sind das erste Beschlagteil 4 und der Haltering 6 erkennbar.

Das erste Beschlagteil 4 ist in noch zu erläuternder Weise drehfest mit der Adapterplatte 2 verbunden, welche mit dem Sitzunterteil eines Fahrzeugsitzes verbunden ist und somit der Verbindung des Beschlagteils 4 mit der Fahrzeugstruktur dient. Das andere Beschlagteil ist mit der Lehne des Fahrzeugsitzes verbunden. Eine Welle 5 ist manuell mittels eines Handrades oder Hebels oder motorisch um die Achse, auf der sich die Welle 5 befindet, drehbar. Insofern wird auf die in der DE 10 2007 009 172 A1 beschriebene Ausgestaltung des Beschlags und der zugehörigen Welle verwiesen.

Im Kontext der vorliegenden Erfindung ist von Interesse die Verbindung des ersten Beschlagteils 4 mit der Adapterplatte 2. Hierzu sind zum einen in dem ersten Beschlagteil 4 und zum anderen in der Adapterplatte 2 miteinander korrespondierende Formschlusselemente ausgebildet. Bei den Formschlusselementen handelt es sich im dargestellten Ausführungsbeispiel, jedoch nicht notwendigerweise, zum einen um an dem ersten Beschlagteil 4 ausgebildete, kreisförmige Vorsprünge oder Nasen 41. Zum anderen handelt es sich bei den in der Adapterplatte 2 ausgebildeten Formschlusselementen um kreisförmige Aussparungen 21. Im dargestellten Ausführungsbeispiel sind drei solcher Nasen 41 und Aussparungen 21 vorgesehen, die entsprechend der Form eines gleichseitigen Dreiecks um die Welle 5 angeordnet sind. Es sind jedoch auch andere Anordnungen und/oder eine andere Anzahl einander korrespondierender Formschlusselemente möglich. Auch können die Formschlusselemente eine andere Form aufweisen, beispielsweise statt kreisförmig polygonal oder oval ausgebildet sein.

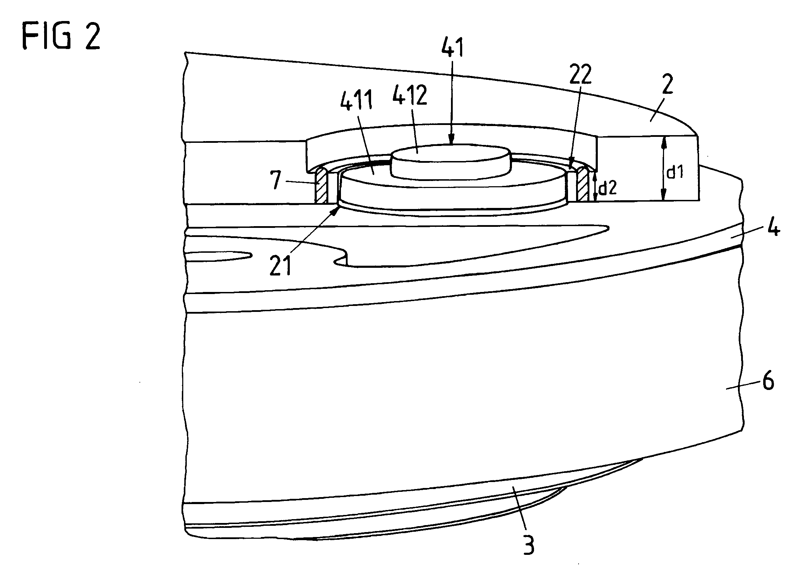

Die Figur 2 zeigt in teilweise geschnittener perspektivischer Ansicht die Verbindung zwischen der Adapterplatte 2 und dem ersten Beschlagteil 4 im Bereich zweier Formschlusselemente 41, 21. Dabei ist zu erkennen, dass die Wandstärke d1 der Adapterplatte 2 angrenzend an die Aussparung 21 entlang eines Ringes 22, der an die Aussparung 21 angrenzt, zu einer Wandstärke d2 reduziert ist. In dem Bereich 22 reduzierter Wandstärke d2 ist eine Durchschweißnaht 7 in Form einer Überlappnaht gesetzt, die sich kreisförmig in dem Bereich 22 reduzierten Durchmessers d2 erstreckt, die Adapterplatte 2 in dem Bereich 22 reduzierter Wandstärke durchdringt und sich zur Verbindung der Adapterplatte 2 mit dem ersten Beschlagteil 4 bis in das erste Beschlagteil 4 erstreckt (nicht dargestellt).

Die einander zugewandten Flächen der Adapterplatte 2 und des Beschlagteils 4 sind dabei plan ausgebildet, so dass die beiden Komponenten für den Schweißvorgang unmittelbar aneinander angrenzend positioniert und mit minimalem Schweißspalt aneinander gedrückt werden können.

Durch Ausbildung der Schweißnaht 7 in dem Bereich 22 reduzierter Wandstärke d2 kann die Schweißleistung aufgrund der Wandstärkenreduktion verkleinert werden. Dies bedeutet weniger Schweißverzug, einen geringeren Invest und eine höhere Schweißgeschwindigkeit. Die Schweißnaht 7 wird dabei bevorzugt mittels einer Laserschweißvorrichtung bereitgestellt.

Die Adapterplatte 2 ist beispielsweise als Stanzelement mit einer Wandstärke zwischen 2,5 und 4,5 mm ausgebildet. Zur Realisierung des Bereichs 22 reduzierter Wandstärke d2 wird beispielsweise zunächst mittels eines ersten Stempels ein Loch in die Adapterplatte 2 gestanzt, dessen Größe der Größe der Aussparung 21 entspricht. Anschließend wird ein zweiter Stempel mit einem größeren Durchmesser konzentrisch aufgesetzt, der aber kein Loch ausstanzt, sondern lediglich die Wandstärke in dem gewünschten Maße reduziert. Das weggedrückte Material wird dabei in Richtung des bereits bereitgestellten Loches gedrängt und ragt in dieses hinein. Anschließend wird erneut der erste Stempel geringeren Durchmessers angesetzt, wobei das in das Loch hineinragende Material wieder entfernt wird. Es verbleibt die gewünschte Abstufung, die angrenzend an die Aussparung 21 einen ringförmigen Bereich reduzierter Wandstärke 22 bereitstellt.

Die Wandstärke der Adapterplatte 2 im reduzierten Bereich liegt beispielsweise zwischen 1,2 und 2,4 mm, insbesondere im Bereich zwischen 1,5 und 2 mm. Das erste Beschlagteil 4 weist beispielsweise eine Wandstärke von 4 bis 4,5 mm auf, wobei der Vorsprung 41 gegenüber dem ersten Beschlagteil 4 um beispielsweise 1,5 bis 2 mm vorsteht.

Wie in der Figur 2 zu erkennen ist, weist die Nase 41 einen ersten Bereich größeren Durchmessers 411 auf, dessen Abmessungen mit den Abmessungen der Aussparung 21 der Adapterplatte 2 korrespondieren, und dessen Höhe mit der reduzierten Wandstärke im Bereich 22 reduzierter Wandstärke korrespondiert. Darüber hinaus ist ein dazu mittig angeordneter, zweiter Bereich 412 vorgesehen, der gegenüber dem ersten Bereich 411 weiter vorsteht. Die Nase 41 kann jedoch auch einstufig ausgebildet sein.

In der Figur 2 sind auch der Haltering 6 und das zweite Beschlagteil 3 zu erkennen.

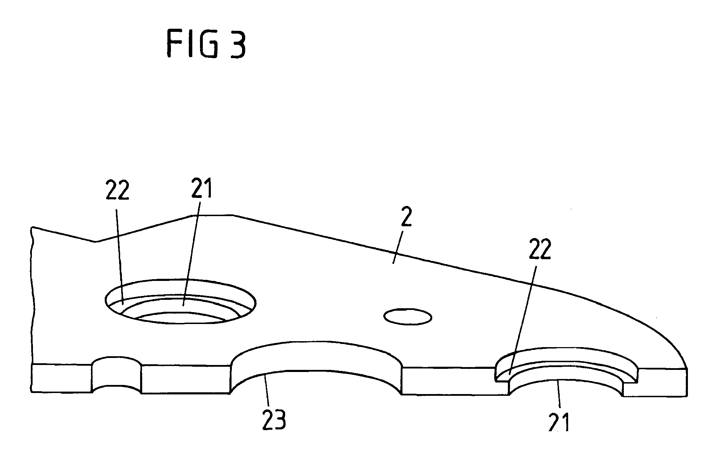

Die Figur 3 zeigt perspektivisch einen Schnitt durch die Adapterplatte 2 im Bereich einer Aussparung 21, die einen Bereich reduzierten Durchmessers 21 aufweist, sowie im Bereich einer mittigen Aussparung 23, durch die die Welle 5 verläuft.

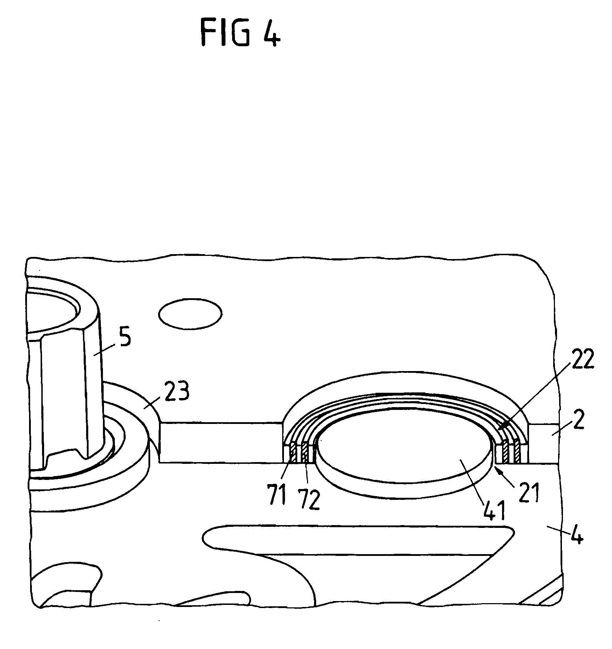

Die Figur 4 zeigt ein Ausführungsbeispiel, bei dem zwei parallele Schweißnähte 71, 72 in dem Bereich 22 reduzierten Durchmessers realisiert sind. Dies dient einer Festigkeitsoptimierung. Die beiden Schweißnähte 71, 72 verlaufen dabei konzentrisch und parallel zueinander.

Zur Herstellung einer Verbindung zwischen dem Beschlag 1 und der Adapterplatte 2 wird zuerst der Beschlag 1 als gesonderte Baugruppe hergestellt, auf Funktionsfähigkeit geprüft und ggf. zu einer Montagestelle transportiert. Weiter wird die Adapterplatte 2, die mindestens einen Bereich reduzierter Wandstärke aufweist, bereitgestellt. Die Adapterplatte 2 und der Beschlag 1 werden zueinander positioniert, indem die Vorsprünge 41 des ersten Beschlagteils 4 durch die Aussparungen 21 der Adapterplatte 2 gesteckt werden. Damit ist die relative Lage zwischen Adapterplatte 2 und erstem Beschlagteil 4 bereits vollständig definiert.

Wie erläutert, sind die aneinander anliegenden Flächen des ersten Beschlagteils 4 und der Adapterplatte 2 jedenfalls im Überschneidungsbereich plan ausgebildet, so dass diese unmittelbar aneinander anliegen und mit einem minimalen Schweißspalt mittels einer Überlappnaht miteinander verschweißt werden können. In einer Ausführungsvariante werden dabei zwei parallele Schweißnähte gemäß der Ausgestaltung der Figur 4 gesetzt.

Die Figur 5 zeigt in Querschnittsansicht einen Teilbereich eines Beschlags 1, der zur Verbindung mit einer Adapterplatte gemäß den Figuren 1 bis 4 geeignet ist. Es sind dabei zunächst das erste Beschlagteil 4, das zweite Beschlagteil 3 und der Haltering 6 erkennbar. Die Vorsprünge 41 des ersten Beschlagteils 4 sind in der Figur 5 nicht dargestellt.

Die Beschlagteile 3 und 4 werden mittels des Halterings 6 in axialer Richtung (entlang der Drehachse 50) zueinander gehalten.

Der Haltering 6 weist eine ebene Mantelfläche auf, gegenüber der ein Anschlag 27 überstreckt abgewinkelt ist. Der Winkel 34 des Anschlags 27 gegenüber der Radialrichtung beträgt im gezeigten vorgespannten Zustand etwa 3 %. Zur Einstellung definierter Federelastizitäten ist an der Innenschulter des Halterings 6 zum Anschlag 27 eine Nut 36 eingebracht, die das Material des Anschlags 27 auf eine Restwandstärke 30 von etwa 0,8 mm reduziert, und dadurch eine gewünschte Gegenkraft des Anschlags 7 gegen das Beschlagteil 3 ermöglicht.

Durch Überstreckung des Anschlags 27 bezüglich der Radialrichtung 35 entsteht zwischen dem Anschlag 27 und der Anlagefläche 37 des zweiten Beschlagteils 3 eine definierte Berührstelle 38. Infolge der Gegenkraft durch den überstreckten Anschlag 27 erfährt das zweite Beschlagteil 3 eine definierte Vorspannung gegenüber dem ersten Beschlagteil 4. Das zweite Beschlagteil 3 kann im Haltering 6 gegenüber dem ersten Beschlagteil 4 mit einer vordefinierten Spannung spielfrei verdreht werden.

In der vorgespannten Position ist der Haltering 6 mittels einer Laserschweißung an das erste Beschlagteil 4 gefügt. Dies erfolgt über eine Durchschweißnaht 32, die mittels Laserschweißung hergestellt ist. Die Durchschweißnaht 32 ist zumindest abschnittsweise am Umfang des ersten Beschlagteils 4 ausgebildet.

In einer alternativen Ausgestaltung kann statt einer Durchschweißnaht 32 eine umlaufende Kehlnaht 45 mittels Laserschweißung oder einem herkömmlichen Schweißverfahren zwischen dem Rand des Halterings 6 und dem ersten Beschlagteil 4 erzeugt werden. Eine solche Kehlnaht 45 lässt größere Radialtoleranzen zwischen dem Haltering 6 und dem ersten Beschlagteil 4 zu. Außerdem können höhere Kräfte übertragen werden.

Um während der Herstellung den Haltering 6 leicht über das erste Beschlagteil 4 schieben zu können, ist zwischen dem Haltering 6 und dem ersten Beschlagteil 4 ein Fügespalt 43 vorgesehen. Im Falle der Fügung mittels einer Kehlnaht kann dieser Fügespalt eine Dimension bis zu 0,5 mm aufweisen.

Der zur Bewegung des zweiten Beschlagteils 3 an dem Haltering 6 notwendige Radialspalt 44 gegenüber dem Haltering 6 ist ebenfalls in der Figur 5 ersichtlich.

Die Durchschweißnaht 32 stellt aus Sicht der Adapterplatte 2 eine vorgeschaltete Lasernaht des Beschlags 1 dar. Durch die vorgeschaltete Lasernaht wird die Baugruppe, die den Beschlag 1 realisiert, geschützt, beispielsweise beim Transport gegen Verschmutzung oder bei der Verbindung mit der Adapterplatte gegen Schweißspritzer.

Die Erfindung beschränkt sich in ihrer Ausgestaltung nicht auf die vorstehend dargestellten Ausführungsbeispiele, die lediglich beispielhaft zu verstehen sind. Beispielsweise kann der Bereich reduzierter Wandstärke statt an Aussparungen der Adapterplatte auch in einem oder mehreren Randbereichen der Adapterplatte realisiert sein. Weiter können Aussparungen, an die ein Bereich reduzierter Wandstärke angrenzt, in anderer Form und in anderer Anzahl in der Adapterplatte ausgebildet sein. Ebenso kann es vorgesehen sein, dass zusätzlich oder alternativ eine Adapterplatte mit einem Bereich reduzierter Wandstärke zur Verbindung des zweiten Beschlagteils mit der Lehne des Fahrzeugsitzes vorgesehen ist.

### Bezugszeichenliste

- 1: Beschlag
- 2: Adapterplatte
- 21: Aussparung in Adapterplatte
- 22: Bereich reduzierter Wandstärke
- 23: Aussparung für Welle
- 27: Anschlag
- 3: zweites Beschlagteil
- 30: Restwandstärke
- 32: Durchschweißnaht
- 34: Winkel
- 35: Radialrichtung
- 36: Nut
- 38: Berührstelle
- 4: erstes Beschlagteil
- 41: Vorsprung des ersten Beschlagteils
- 411: erster Bereich Vorsprung
- 412: zweiter Bereich Vorsprung
- 43: Fügespalt
- 44: Fügespalt
- 45: Kehlnaht
- 5: Welle
- 50: Drehachse
- 6: Haltering
- 7, 71, 72: Schweißnähte

- d1: Wandstärke
- d2: reduzierte Wandstärke

## Patentansprüche

1. Vorrichtung, insbesondere für einen Fahrzeugsitz, mit einem Beschlag (1) und mindestens einer mit dem Beschlag (1) verbundenen Adapterplatte (2), wobei
- der Beschlag (1) ein erstes Beschlagteil (4) und ein relativ zu dem ersten Beschlagteil (4) um eine Achse drehbares zweites Beschlagteil (3) umfasst, und
- die Adapterplatte (2) mit dem ersten Beschlagteil (4) mittels mindestens einer Schweißnaht (7, 71, 72) fest verbunden ist,
wobei die Adapterplatte (2) mindestens einen Bereich (22) aufweist, der eine reduzierte Wandstärke (d2) aufweist,
**dadurch gekennzeichnet,**
**dass** die Schweißnaht (7, 71, 72) zum Verbinden der Adapterplatte (2) und des ersten Beschlagteils (4) miteinander als Überlappnaht in dem Bereich (22) reduzierter Wandstärke in der Adapterplatte (2) ausgebildet ist.

2. Vorrichtung nach Anspruch 1, **dadurch gekennzeichnet, dass** die Adapterplatte (2) und das erste Beschlagteil (4) miteinander korrespondierende Formschlusselemente (21, 41) aufweisen, die eine Vorpositionierung von Adapterplatte (2) und erstem Beschlagteil (4) zueinander erlauben, und mindestens ein Bereich (22) reduzierter Wandstärke an einem oder angrenzend an ein Formschlusselement (21) der Adapterplatte (2) ausgebildet ist.

3. Vorrichtung nach Anspruch 1 oder 2, **dadurch gekennzeichnet, dass** die Adapterplatte (2) mindestens eine Aussparung (21) aufweist und die Wandstärke der Adapterplatte (2) angrenzend an die Aussparung (21) reduziert ist.

4. Vorrichtung nach Anspruch 3, **dadurch gekennzeichnet, dass** die Aussparung (21) kreisförmig und ein Bereich (22) reduzierter Wandstärke der Adapterplatte (2), der an die Aussparung (21) angrenzt, ringförmig ausgebildet sind.

5. Vorrichtung nach Anspruch 3 oder 4, soweit rückbezogen auf Anspruch 2, **dadurch gekennzeichnet, dass** an dem ersten Beschlagteil (4) als Formschlusselement mindestens ein Vorsprung (41) ausgebildet ist, der mit einer Aussparung (21) der Adapterplatte (2) korrespondiert.

6. Vorrichtung nach einem der vorangehenden Ansprüche, **dadurch gekennzeichnet, dass** die Adapterplatte (2) in einem Bereich reduzierter Wandstärke eine Wandstärke aufweist, die bis zu 70% gegenüber der Wandstärke in anderen Bereichen der Adapterplatte (2) reduziert ist.

7. Vorrichtung nach einem der vorangehenden Ansprüche, **dadurch gekennzeichnet, dass** die Adapterplatte (2) in einem Bereich reduzierter Wandstärke eine Wandstärke zwischen 1,2 mm und 2,4 mm, insbesondere zwischen 1,5 mm und 2 mm aufweist, während die Wandstärke der Adapterplatte (2) ansonsten einen Wert zwischen 2,5 und 4,5 mm aufweist.

8. Vorrichtung nach einem der vorangehenden Ansprüche, **dadurch gekennzeichnet, dass** die Schweißverbindung zwei parallel verlaufende Überlappnähte (71, 72) aufweist.

9. Vorrichtung nach einem der vorangehenden Ansprüche, **dadurch gekennzeichnet, dass** des weiteren ein Haltering (6) vorgesehen ist, der das erste und das zweite Beschlagteil (4, 3) in axialer Richtung zusammenhält, wobei das erste Beschlagteil (4) und der Haltering (6) über eine weitere Schweißnaht (32) miteinander verbunden sind, die zumindest abschnittsweise umlaufend im ersten Beschlagteil (4) ausgebildet ist.

10. Vorrichtung nach einem der vorangehenden Ansprüche, **dadurch gekennzeichnet, dass** des weiteren ein Haltering (6) vorgesehen ist, der das erste und das zweite Beschlagteil (4, 3) in axialer Richtung zusammenhält, wobei der Haltering (6) das erste Beschlagteil (4) axial übergreift und mittels eines entgegen der Radialrichtung einwärts abgewinkelten Anschlags (27) das zweite Beschlagteil (3) gegen das erste Beschlagteil (4) vorspannt.

11. Vorrichtung nach einem der vorangehenden Ansprüche, **dadurch gekennzeichnet, dass** die Schweißnaht (7, 71, 72), die die Adapterplatte (2) mit dem ersten Beschlagteil (4) verbindet, eine Laserschweißnaht ist.

12. Verfahren zur Herstellung einer Vorrichtung gemäß Anspruch 1, mit den Schritten:
- Bereitstellen eines Beschlags (1), der ein erstes Beschlagteil (4) und ein relativ zu dem ersten Beschlagteil (4) um eine Achse drehbares zweites Beschlagteil (3) umfasst,
- Bereitstellen einer Adapterplatte (2), die mindestens einen Bereich (22) mit einer reduzierten Wandstärke (d2) aufweist,
- Verbinden der Adapterplatte (2) mit dem ersten Beschlagteil (4) mittels einer Schweißnaht (7, 71, 72), die in dem Bereich reduzierter Wandstärke (22) in der Adapterplatte (2) ausgebildet wird, wobei die Schweißnaht (7, 71, 72) zum Verbinden der Adapterplatte (2) mit dem ersten Beschlagteil (4) als Überlappnaht ausgebildet ist.

## Claims

1. An apparatus, in particular for a vehicle seat, comprising a fitting (1) and at least one adapter plate (2) connected with the fitting (1), wherein
- the fitting (1) comprises a first fitting part (4) and a second fitting part (3) rotatable about an axis relative to the first fitting part (4), and
- the adapter plate (2) is firmly connected with the first fitting part (4) by means of at least one welding seam (7, 71, 72),
wherein the adapter plate (2) includes at least one region (22) which has a reduced wall thickness (d2),
**characterized in**
**that** the welding seam (7, 71, 72) for connecting the adapter plate (2) and the first fitting part (4) with each other is formed as overlap seam in the region (22) of reduced wall thickness in the adapter plate (2).

2. The apparatus according to claim 1, **characterized in that** the adapter plate (2) and the first fitting part (4) include form-fit elements (21, 41) corresponding with each other, which allow a prepositioning of adapter plate (2) and first fitting part (4) relative to each other, and at least one region (22) of reduced wall thickness is formed on a or adjacent to a form-fit element (21) of the adapter plate (2).

3. The apparatus according to claim 1 or 2, **characterized in that** the adapter plate (2) includes at least one recess (21) and the wall thickness of the adapter plate (2) is reduced adjacent to the recess (21).

4. The apparatus according to claim 3, **characterized in that** the recess (21) is circular and a region (22) of reduced wall thickness of the adapter plate (2), which adjoins the recess (21), is formed ring-shaped.

5. The apparatus according to claim 3 or 4, as far as related to claim 2, **characterized in that** on the first fitting part (4) at least one protrusion (41) is formed as form-fit element which corresponds with a recess (21) of the adapter plate (2).

6. The apparatus according to any of the preceding claims, **characterized in that** in a region of reduced wall thickness the adapter plate (2) has a wall thickness which is reduced by up to 70 % as compared to the wall thickness in other regions of the adapter plate (2).

7. The apparatus according to any of the preceding claims, **characterized in that** in a region of reduced wall thickness the adapter plate (2) has a wall thickness between 1.2 mm and 2.4 mm, in particular between 1.5 mm and 2 mm, whereas the wall thickness of the adapter plate (2) otherwise has a value between 2.5 mm and 4.5 mm.

8. The apparatus according to any of the preceding claims, **characterized in that** the welding connection includes two overlap seams (71, 72) extending in parallel.

9. The apparatus according to any of the preceding claims, **characterized in that** furthermore a retaining ring (6) is provided, which holds the first and the second fitting part (4, 3) together in axial direction, wherein the first fitting part (4) and the retaining ring (6) are connected with each other via a further welding seam (32) which is at least partly formed circumferential in the first fitting part (4).

10. The apparatus according to any of the preceding claims, **characterized in that** furthermore a retaining ring (6) is provided, which holds the first and the second fitting part (4, 3) together in axial direction, wherein the retaining ring (6) axially engages over the first fitting part (4) and pretensions the second fitting part (3) against the first fitting part (4) by means of a stop (27) angled inwards against the radial direction.

11. The apparatus according to any of the preceding claims, **characterized in that** the welding seam (7, 71, 72) which connects the adapter plate (2) with the first fitting part (4) is a laser welding seam.

12. A method for producing an apparatus according to claim 1, with the following steps:
- providing a fitting (1) which comprises a first fitting part (4) and a second fitting part (3) rotatable about an axis relative to the first fitting part (4),
- providing an adapter plate (2) which includes at least one region (22) with a reduced wall thickness (d2),
- connecting the adapter plate (2) with the first fitting part (4) by means of a welding seam (7, 71, 72) which is formed in the region of reduced wall thickness (22) in the adapter plate (2), wherein for connecting the adapter plate (2) with the first fitting part (4) the welding seam (7, 71, 72) is formed as overlap seam.

## Revendications

1. Dispositif, en particulier pour un siège de véhicule, avec une ferrure (1) et au moins une plaque d'adaptation (2) reliée à la ferrure (1),
- la ferrure (1) comportant une première partie de ferrure (4) et une seconde partie de ferrure (3) pouvant tourner par rapport à la première partie de ferrure (4) autour d'un axe, et
- la plaque d'adaptation (2) étant fixement reliée à la première partie de ferrure (4) à l'aide d'au moins un cordon de soudure (7, 71, 72),
la plaque d'adaptation (2) présentant au moins une zone (22) qui présente une épaisseur de paroi (d2) réduite,
**caractérisé en ce que**
le cordon de soudure (7, 71, 72) est réalisé pour la liaison de la plaque d'adaptation (2) et de la première partie de ferrure (4) entre elles comme cordon de recouvrement dans la zone (22) d'épaisseur de paroi réduite dans la plaque d'adaptation (2).

2. Dispositif selon la revendication 1, **caractérisé en ce que** la plaque d'adaptation (2) et la première partie de ferrure (4) présentent des éléments à complémentarité de formes correspondants les uns aux autres (21, 41) qui permettent un prépositionnement de la plaque d'adaptation (2) et de la première partie de ferrure (4) l'une par rapport à l'autre, et au moins une zone (22) d'épaisseur de paroi réduite est réalisée sur un ou de manière contiguë à un élément à complémentarité de formes (21) de la plaque d'adaptation (2).

3. Dispositif selon la revendication 1 ou 2, **caractérisé en ce que** la plaque d'adaptation (2) présente au moins un évidement (21) et l'épaisseur de paroi de la plaque d'adaptation (2) est réduite de manière contiguë à l'évidement (21).

4. Dispositif selon la revendication 3, **caractérisé en ce que** l'évidement (21) est réalisé de manière circulaire et une zone (22) d'épaisseur de paroi réduite de la plaque d'adaptation (2) qui est contiguë à l'évidement (21), est réalisée de manière annulaire.

5. Dispositif selon la revendication 3 ou 4 dans la mesure où elle concerne la revendication 2, **caractérisé en ce qu'**au moins une saillie (41) qui correspond à un évidement (21) de la plaque d'adaptation (2), est réalisée sur la première partie de ferrure (4) comme élément à complémentarité de formes.

6. Dispositif selon l'une quelconque des revendications précédentes, **caractérisé en ce que** la plaque d'adaptation (2) présente dans une zone d'épaisseur de paroi réduite une épaisseur de paroi qui est réduite jusqu'à 70 % par rapport à l'épaisseur de paroi dans d'autres zones de la plaque d'adaptation (2).

7. Dispositif selon l'une quelconque des revendications précédentes, **caractérisé en ce que** la plaque d'adaptation (2) présente dans une zone d'épaisseur de paroi réduite une épaisseur de paroi comprise entre 1,2 et 2,4 mm, en particulier entre 1,5 et 2 mm, alors que l'épaisseur de paroi de la plaque d'adaptation (2) présente sinon une valeur comprise entre 2,5 et 4,5 mm.

8. Dispositif selon l'une quelconque des revendications précédentes, **caractérisé en ce que** la liaison soudée présente deux cordons de recouvrement (71, 72) s'étendant parallèlement.

9. Dispositif selon l'une quelconque des revendications précédentes, **caractérisé en ce qu'**en outre, un anneau de retenue (6) est prévu, lequel maintient la première et la seconde parties de ferrure (4, 3) dans le sens axial, la première partie de ferrure (4) et l'anneau de retenue (6) étant reliés entre eux par un autre cordon de soudure (32) qui est réalisé au moins par section de manière tournante dans la première partie de ferrure (4).

10. Dispositif selon l'une quelconque des revendications précédentes, **caractérisé en ce qu'**en outre, un anneau de retenue (6) est prévu, lequel maintient la première et la seconde parties de ferrure (4, 3) dans le sens axial, l'anneau de retenue (6) recouvrant axialement la première partie de ferrure (4) et précontraignant la seconde partie de ferrure (3) contre la première partie de ferrure (4) à l'aide d'une butée (27) coudée vers l'intérieur dans le sens contraire au sens radial.

11. Dispositif selon l'une quelconque des revendications précédentes, **caractérisé en ce que** le cordon de soudure (7, 71, 72) qui relie la plaque d'adaptation (2) à la première partie de ferrure (4), est un cordon de soudure au laser.

12. Procédé de fabrication d'un dispositif selon la revendication 1, présentant les étapes suivantes :
- la mise à disposition d'une ferrure (1) qui comporte une première partie de ferrure (4) et une seconde partie de ferrure (3) pouvant tourner par rapport à la première partie de ferrure (4) autour d'un axe,
- la mise à disposition d'une plaque d'adaptation (2) qui présente au moins une zone (22) avec une épaisseur de paroi réduite (d2),
- la liaison de la plaque d'adaptation (2) avec la première partie de ferrure (4) à l'aide d'un cordon de soudure (7, 71, 72) qui est réalisé dans la zone d'épaisseur de paroi réduite (22) dans la plaque d'adaptation (2), le cordon de soudure (7, 71, 72) étant réalisé pour la liaison de la plaque d'adaptation (2) avec la première partie de ferrure (4) comme cordon de recouvrement.
